# EUROPEAN PATENT APPLICATION

(11) **EP 3 660 755 A1**
(43) Date of publication of application: **03.06.2020**
(21) Application number: 18208660.3
(22) Date of filing: 27.11.2018
(51) Int. Cl.: G06Q 10/00

(54) **SYSTEM, APPARATUS AND METHOD FOR MANAGING A TECHNICAL INSTALLATION**

(71) Applicant: Siemens Aktiengesellschaft, 80333 München (DE)
(72) Inventor: B R, Chethan Ravi, 560100 Bangalore Karnataka (IN); MATHEW, Bony, 683542 Perumbavoor, Kerala (IN)
(74) Representative: Isarpatent

(57) **Abstract**

A system, apparatus and method of managing a technical installation (390) comprising an asset (380A). The method comprising predicting a likelihood of failure of at least one component (382A) in the asset based on an asset model (385A) of the asset (380A), wherein the asset model (385A) is a virtual replica of components and the interactions between the components (382A, 384A, 386A) in the asset (380A). Further, the method includes determining failure parameters of the predicted likelihood of failure of the at least one component (382A). Furthermore, generating an optimized geometric model of the at least one component (382A) based on the failure parameters and the asset model (385A).

## Description

The present invention relates to managing a technical installation including one or more assets.

An asset during operation experiences failure due to several faults. There may be multiple methodologies to predict failure in advance. However, maintenance and replacement of the asset or components in the asset may cumbersome.

Generally, spare components of the asset may be stored in the inventory. However, storing all the spare components may not possible. Further, time taken to get a new component to replace a failed component may be significant. Accordingly, such approaches may lead to an increased downtime of the technical installation.

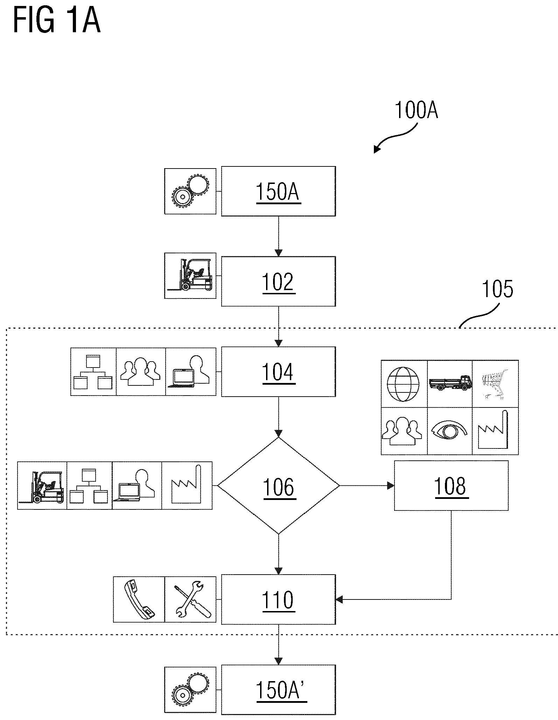

FIG 1A is a flowchart illustrating a conventional method 100A of managing an asset 150A in a technical installation. The method 100A begins at step 102 with the occurrence of failure of a component in the asset 150A. At step 104, department approvals are received to process replacement of the failed component. At step 106, an inventory for the technical installation is checked for availability of the component. At step 108, procurement is made for a new component is the inventory does not have the failed component. At step 110, if spare component is available in the inventory, a service engineer is called in for replacing the component to obtain asset 150A'. The steps 104-110 are collectively referred to as conventional step 105.

In light of the above, there exists a need to manage the technical installation to reduce the downtime.

Therefore, it is an object of the present invention to provide a system, apparatus and method for managing a technical installation with one or more assets.

The object of the present invention is achieved by a method to manage the technical installation based on an asset model and an optimized geometric model. Example of assets include any machinery in a technical system or technical installation/facility such as motor, gear, bearing, shaft, switch-gear, rotor, circuit breaker, protection devices, remote terminal units, transformers, reactors, disconnectors, gear-drive, gradient coils, magnet, radio frequency coils etc. Example technical systems include turbines, large drives, Magnetic Resonance Imaging (MRI) scanner, etc. Example facility/technical installation may be a complex industrial set-up with a plurality of assets such as a power plant, wind farm, power grid, manufacturing facility, process plants and so on.

The method may comprise receiving various types of data associated with condition of the asset and operating environment of the asset. The condition data is received from different sources (e.g., sensors, scanners, user devices, etc.). The sensors measure operating parameters associated with the asset. For example, the sensors may include vibration sensors, current and voltage sensors, etc. The term "operation parameter" refers to one or more characteristics of the asset. Accordingly, the condition data is a measure of the operating parameters associated with the operation of the asset. For example, the condition data includes values of vibration, temperature, current, magnetic flux, velocity, power of a rotor in a turbine. The condition data also includes scanned data from the scanners such as thermal scanners, three-dimensional scanners, etc. The scanned data includes geometric properties of the components and the asset, such as height, length, width and contour of a component. Accordingly, the condition data is a measure of the geometric properties of the components.

The method comprises predicting a likelihood of failure of component in the asset based on an asset model of the asset. The likelihood of failure includes the type of failure that is likely to occur and time range when the failure is likely to occur. The asset model is a virtual replica of components and the interactions between the components in the asset.

The method may comprise generating the virtual replica. The virtual replica includes FEM (finite element models) and network graphs that include Bayesian calibration algorithms, machine learning algorithms to predict operation of the components individually and in combination. The virtual replica can be a meta-model of the asset, which is a simplification of a high-fidelity simulation of the asset. The meta-model preserves essential behaviour and dominant effects for the purpose of reducing solution time or storage capacity required for the virtual replica.

The method may comprise detecting at least one fault indication associated with operation parameters of the asset. The at least one fault indication is detected based on the condition data associated with the operation of the asset. The at least one fault indication may also be detected based on historical data of the asset or a fleet of the asset. The likelihood of failure is predicted based on the at least one fault indication.

The method may further comprise detecting the at least one fault indication by identifying an anomaly pattern in an asset historical data or a fleet historical data of the fleet of the asset. The anomaly pattern may also be identified in the condition data. The anomaly pattern is identified by comparing the asset historical data, the fleet historical data and the condition data based on predetermined threshold values. The predetermined threshold values include operator input values and/or boundary limits of operation of the asset. In an embodiment, the predetermined threshold values are learnt through machine learning algorithms based on failures occurring in the fleet of assets. Exemplary fault indications may include high temperature, increased vibration, etc.

The method may comprise mapping the at least one fault indication to the component using fault signatures of the at least one fault indication. The method may further comprise generating the fault signatures based on the asset model and the condition data of the asset. The fault signatures comprises the location each of the fault indications, location nexus between the at least one fault indication and the location of the each of the fault indications. The fault signature refers to an electronic footprint of the fault indications in the asset. The fault signatures contain information regarding various health status conditions of the asset.

The method may comprise validating the predicted likelihood of failure based on the fault signatures and the condition data associated with operation of the asset. Validation of the predicted likelihood of failure is based on sensor data generated from sensors associated with the asset and on the scanned data. The scanned data may be generated from the thermal scanner or the three-dimensional scanner associated with the asset. For example, the anomaly pattern in the sensor data which is mapped to the predicted likelihood of failure. In another example, the three-dimensional scanner scans the component upon its removal from the asset. The scanned data is analysed to validate the predicted likelihood of failure.

The method comprises determining failure parameters of the predicted likelihood of failure. The failure parameters include operation parameters and geometric properties of the component that are associated with the predicted likelihood of failure. For example, the operation parameters include increased vibration or electric discharge and the geometric properties include deformation in the contour of the component. In an embodiment, the increased vibration may be mapped the deformation of the contour.

The method may comprise determining a design specification of the component from the condition data and the asset model. The design specification includes the component size and weight, performance, material, structure etc. In an embodiment, the design specification is a Computer Aided Design (CAD) model that is generated from the condition data and the asset model. For example, the scanned data from the three-dimensional scanner is used to reconstruct the CAD model in real-time.

The method may further comprise mapping the design specification to the failure parameters by based on a sensitivity analysis of the failure parameters and the design specification. The sensitivity analysis evaluates change in the design specification and its impact on the failure parameters. In an embodiment, change in structure of the component is analysed to determine associated change in the failure parameters. For example, the structure of the component can be changed to reduce or increase vibration. Therefore, the sensitivity analysis indicates the origin of the failure parameters in terms of the design specification. Accordingly, the present method advantageously identifies potential cause of the predicted likelihood of failure.

The method comprises generating the optimized geometric model of the component based on the failure parameters and the asset model. The optimized geometric model is generated such that the predicted likelihood of failure is mitigated. Further, the optimized geometric model is simulated on the asset model to understand whether the optimized geometric model is reliable.

The method may comprise comparing the design specification of the component with a historical specification of the component. The historical specification includes the component size and weight, performance, material, structure etc, when the component was manufactured. For example, the historical specification includes CAD model of the component prepared when it was manufactured. The comparison between the design specification and the historical specification indicates whether there has been any deviation in the component during operation of the asset. For example, the comparison determines changes in the component due to wear and tear or the operating environment.

The method may comprise generating sample specifications of the component based on the design specification and the sensitivity analysis. The sample specifications are configured to overcome the validated likelihood of failure. The sample specifications are simulated on the asset model to determine outcome of each of the sample specifications on the asset and the component. The simulation of the sample specification includes determining reliability of each of the sample specifications. The reliability analysis is used to determine which sample specification is most optimized to mitigate the predicted likelihood of failure. In an embodiment, the sample specifications may include different variations material and contour for the component. The simulation of the variations will be suitable to determine which variation is most effective. Accordingly, the method may comprise generating the optimized geometric model of the component by selecting the optimized specification from the sample specifications based on the simulation.

The method may comprise determining whether the predicted likelihood of failure is recurrent in the fleet of assets. The method also determined whether the predicted likelihood of failure recurs above a recurrence threshold. Therefore, the component is analysed for potential failure in similar assets. If the predicted likelihood is above the recurrence threshold a fleet specification is updated with the optimized specification. Through this method, manufacture of the fleet of assets is managed to reduce downtime due to failure of the component. The present method is advantageous in a digital enterprise with a fleet of assets such as automobile plant, mobile phone manufacturing plant, etc.

The method may comprise instantaneously initiating manufacture of the component based on the optimized geometric model through advanced manufacturing techniques. Example advanced manufacturing techniques include additive manufacturing techniques such as Fused deposition modeling (FDM), Stereolithography (SLA), Digital Light Processing (DLP), Selective Laser Sintering (SLS), Selective laser melting (SLM), Laminated object manufacturing (LOM) and Digital Beam Melting (EBM).

The method may comprise instantaneously initiating replacement of the component with the optimized component whereby the asset is capable of overcoming the predicted likelihood of failure.

The method may comprise actuating field devices to disassemble components of the asset to remove the component. Further, the field devices assemble the components of the asset with the optimized component. The field devices comprise automated units. For example, the field devices include robotic arms that automatically disassemble and assemble the asset when the optimized component is ready.

The object of the present invention is achieved by an apparatus for managing a technical installation. The apparatus comprises one or more processing units and a memory unit communicative coupled to the one or more processing units. The memory unit comprises a maintenance module stored in the form of machine-readable instructions executable by the one or more processing units, wherein the maintenance module is configured to perform method steps described above. The execution of the fault detection module can also be performed using co-processors such as Graphical Processing Unit (GPU), Field Programmable Gate Array (FPGA) or Neural Processing/Compute Engines.

According to an embodiment of the present invention, the apparatus can be an edge computing device. As used herein "edge computing" refers to computing environment that is capable of being performed on an edge device (e.g., connected to the sensors unit in an industrial setup and one end and to a remote server(s) such as for computing server(s) or cloud computing server(s) on other end), which may be a compact computing device that has a small form factor and resource constraints in terms of computing power. A network of the edge computing devices can also be used to implement the apparatus. Such a network of edge computing devices is referred to as a fog network.

In another embodiment, the apparatus is a cloud computing system having a cloud computing based platform configured to provide a cloudservice for analyzing condition data of the assets. As used herein, "cloud computing" refers to a processing environment comprising configurable computing physical and logical resources, for example, networks, servers, storage, applications, services, etc., and data distributed over the network, for example, the internet. The cloud computing system provides on-demand network access to a shared pool of the configurable computing physical and logical resources. The network is, for example, a wired network, a wireless network, a communication network, or a network formed from any combination of these networks.

In yet another embodiment, the apparatus is an Additive Manufacturing (AM) device capable of communicating with the asset, the field devices, sensors and scanners associated with the asset. In an embodiment, the AM device is configured to store the meta model of the asset such that the analysis of the component is performed by the AM device. Such an AM device may be present in the technical installation or in the vicinity of the technical installation. Therefore, the present invention advantageously ensures that details of the component do not leave the premises of the technical installation.

Additionally, the object of the present invention is achieved by a system comprising one or more devices, such as the sensors and scanners, capable of providing condition data associated with operation of assets in at least one technical installation. The system further comprises an apparatus communicatively coupled to one or more devices as described above. The apparatus is configured to manage the at least one technical installation by ensuring reliability of the assets through the performance of the above method.

The object of the present invention is achieved by a computer-program product having machine-readable instructions stored therein, which when executed by a processor, cause the processor to perform a method as describe above.

The present invention is advantageous as the method simplifies the extensive procedure during maintenance of the asset. The time to replace or repair the component that has potential to fail is reduced. Through the usage of automated units the reliability of the replacement procedure is improved. By providing analysing a failed component of the asset on the cloud computing platform, failures across multiple technical installations and assets can be mitigated. Real time manufacturing of the component on the premises of the technical installation will reduce the transport related issues. Further, limited components need to be stored in inventory based on criticality of the components.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1A: is a flowchart illustrating a conventional method of managing an asset in a technical installation, according to prior art;
- FIG 1B: is a flowchart illustrating a method of managing an asset in a technical installation, according an embodiment of the present invention;
- FIG 2: illustrates a block diagram of a system to manage an asset in a technical installation, according an embodiment of the present invention;
- FIG 3: illustrates a block diagram of an apparatus to manage a technical installation, according an embodiment of the present invention;
- FIG 4: illustrates a block diagram of a system to manage multiple technical installations, according an embodiment of the present invention; and
- FIG 5: is a flowchart illustrating a method of managing a technical installation including one or more assets, according an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

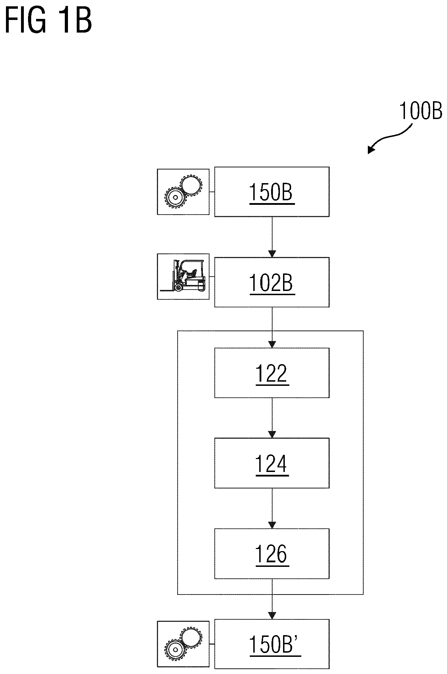

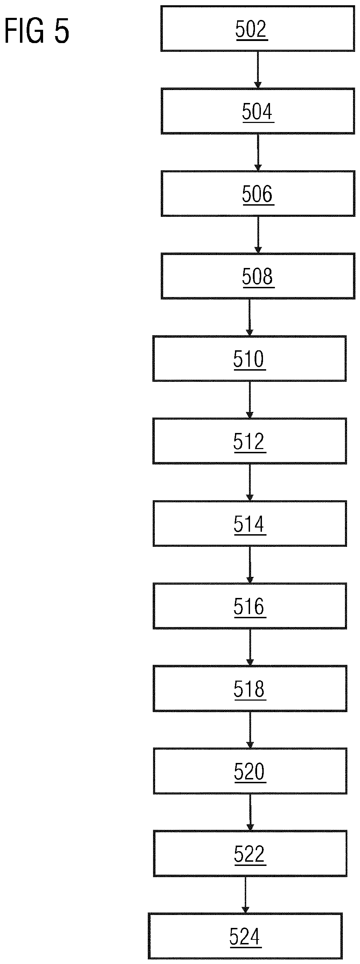

FIG 1B is a flowchart illustrating a method 100B of managing an asset 150B in a technical installation, according an embodiment of the present invention. The asset 150B is comparable to the asset 150A. The method begins at step 102B with prediction of likelihood of failure of a component in the asset. At step 122, the predicted likelihood of failure of the component is validated based on an asset model of the asset 150B. To pre-empt failure of the asset due to potential failure of the component steps 124 and 126 are performed. At step 124, an optimized component is manufactured through advanced manufacturing techniques at the technical installation. The method of generating an optimized specification for the optimized component is explained in detail in FIG 5. At step 126, robotic arms disassemble to remove the component and assemble asset 150B' with the optimized component. The steps 122-126 replace the step 105 of the conventional method 100B. Accordingly, the method 100B is advantageous over method 100A as the downtime of the asset 150B is reduced. Further, the component that has failed is replaced with the optimized component, which improves reliability of the asset.

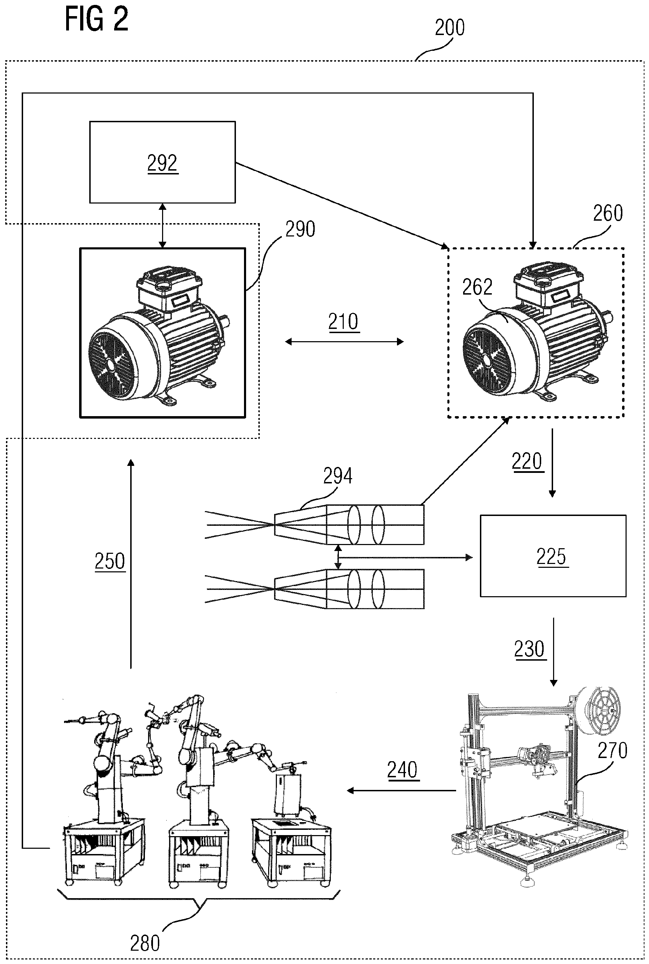

FIG 2 illustrates a block diagram of a system 200 to manage a motor 290 in a technical installation, according an embodiment of the present invention. The system 200 includes sensors 292 and three-dimensional scanner 294 to measure operating parameters of the motor 290 and the operating environment. The motor 290 includes shaft, rotor, stator, etc., which are collectively referred to as components (not numbered in FIG 2).

The system 200 includes an apparatus 260 that manages the motor 290 to ensure minimum downtime. The apparatus 260 is communicatively couple to the sensors 292 and the scanner 294. The apparatus 260 includes a motor model 262 of the motor 290. The motor model 262 is configured as a virtual replica of the motor 290 including the components. The virtual replica includes FEM (finite element models) and network graphs that include Bayesian calibration algorithms, machine learning algorithms to predict operation of the components individually and in combination.

The system also includes an additive manufacturing device 270 that is communicatively coupled to the apparatus 270. In an embodiment, the additive manufacturing device 270 is configured to perform the operation of the apparatus 260. Further, the system includes robotic arms 280 communicatively coupled to the apparatus 260.

The operation of the system 200 is indicated by steps 210-250. At step 210, the asset model is updated with condition data generated from the sensors 292. At step 220, the condition data is analysed to predict a likelihood of failure of a component based on the motor model 262.

At step 225, the component is scanned by the three-dimension scanner 294 to determine a design specification of the component. The design specification reflects the component size and weight, performance, material, structure of the component that has failed or has potential to fail. Further, at step 225, an optimized specification is generated by analysing the design specification. At step 230, the optimized specification is communicated to the additive manufacturing device 270. The steps 210, 220, 225 and 230 are performed by the apparatus 260.

At step 240, the additive manufacturing device 270 prints an optimized component with the optimized specification. The optimized component is collected by the robotic arms 280. At step 250, the robotic arms 280 disassemble the motor 290 and replace the component with the optimized component. Also, the robotic arms 280 assemble the motor 290 with the optimized component.

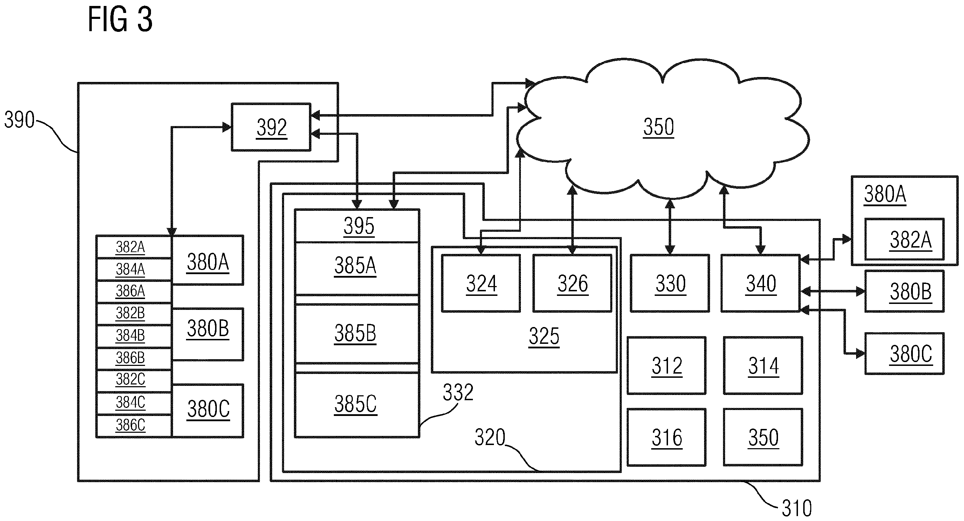

FIG 3 illustrates a block diagram of a robotic printer 310 to manage a technical installation 390, according an embodiment of the present invention. The technical installation 390 includes a plurality of assets 380A-380B, each having components 382A-386A, 382B-386B and 382C-386C, respectively. The technical installation 390 includes sensors 392 communicatively coupled to each of the assets 380A-380B.

The robotic printer 310 communicates with the technical installation 390 and the assets 380A-380C through a network interface 350. The robotic printer 310 includes a communication unit 312, at least one processor 314, a display panel 316 and a memory 320 communicatively coupled to each other. The communication unit 312 includes a transmitter, a receiver and Gigabit Ethernet port. The memory 320 includes a simulation module 322, a failure validation module 324 and a design module 326.

The robotic printer 310 also includes a printer unit 330 and arms 340. The robotic printer 310 may also include vehicle unit 350 with sensors for navigation in the technical installation 390.

The modules 322, 324 and 326 in the memory 320 are configured to predict a likelihood of failure in the components 382A-386A, 382B-386B and 382C-386C and determine an optimized component to replace a potentially failing component. The operation of the robotic printer 310 is described as below.

Various types of data associated with condition of the assets 380A-380C are obtained from the sensors 392. The condition data a measure of the operating parameters associated with the operation of the assets 380A-380C.

The simulation module 322 is configured to receive and update an installation model 395 for the technical installation 390 with the condition data. Further, the simulation module also receives and updates asset models 385A-385C for each of the assets 380A-380C. The installation model 395 and the asset models 385A-385C are virtual replicas of the technical installation 390 and the assets 380A-380C, respectively.

The simmulation module 322 is configured to predict a likelihood of failure of a component 382A in the asset 380A based on the asset model 385A. The likelihood of failure includes the type of failure that is likely to occur and time range when the failure is likely to occur. The asset model 385A is a virtual replica of components 382A-386A and the interactions between the components 382A-386A in the asset 380A.

In an embodiment, the simulation module 322 is configured to generate the virtual replica. The virtual replica includes meta-model of the asset 380A, which is a simplification of a high-fidelity simulation of the asset 380A. The meta-model preserves essential behaviour of the asset 380A.

The failure validation module 324 is configured to validate the predicted likelihood of failure based on fault signatures generated from the condition data. The fault signature refers to an electronic footprint of fault indications in the asset 380A. The fault indications are identified based on anomaly pattern in the condition data. For example, the anomaly pattern in the condition data which is mapped to the predicted likelihood of failure.

The design module 326 is configured to determine failure parameters of the predicted likelihood of failure. The failure parameters include operation parameters and geometric properties of the component 382A that are associated with the predicted likelihood of failure. For example, increase in vibration may be mapped the deformation of the contour.

The design module 326 is configured to determine a design specification of the component 382A from the condition data and the asset model. The design specification includes the component size and weight, performance, material, structure etc. In an embodiment, the design specification is a Computer Aided Design (CAD) model that is generated from the condition data and the asset model.

In another embodiment, the component 382A is disassembled by the arms 340 and scanned using a three-dimensional scanner (not shown in FIG 3.). The design module is configured to receive the scanned data from the three-dimensional scanner and reconstruct the CAD model in real-time.

The design module 326 is configured to generate an optimized geometric model of the component 382A based on the failure parameters and the asset model. The optimized geometric model is generated such that the predicted likelihood of failure is mitigated. Further, the design module 326 is configured to simulate the optimized geometric model on the asset model to understand whether the optimized geometric model is reliable.

The printer head 330 receives the optimized geometric model and instantaneously initiates manufacture of the component 382A' based on the optimized geometric model. As used herein 382A' indicates that the component 382A is optimized to mitigate the predicted likelihood of failure. The arms 340 of the robotic printer 310 disassemble the asset 380A to remove the component 382A. Further, the arms 340 assemble the asset 380A with the optimized component 382A'.

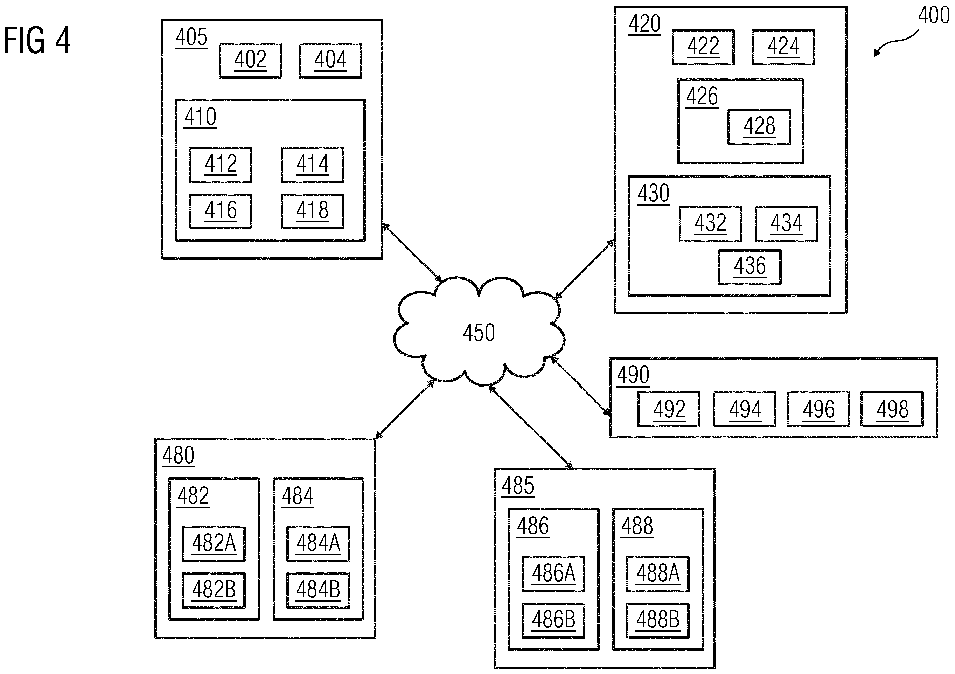

FIG 4 illustrates a block diagram of a system 400 to manage multiple technical installations 480 and 485. The technical installations 480 and 485 include assets 482, 484 and 486, 488, respectively. Each of the assets 482-488 include associated components 482A, 482B, 484A, 484B, 486A, 486B, 488A and 488B, respectively. In the present embodiment, the components 482A, 484A, 486A and 488A belong to the same fleet. Similarly, the components 482B, 484B, 486B and 488B belong of the same fleet.

The system 400 includes a server 405, a network interface 450 communicatively coupled to the server 405. The system 400 also includes an apparatus 420 communicatively coupled to the server 405 via the network interface 450.

The apparatus 420 includes a communication unit 422, at least one processor 424, a display panel 426 with a Graphical User Interface (GUI) 428 and a memory 430 communicatively coupled to each other. The communication unit 422 includes a transmitter, a receiver and Gigabit Ethernet port. The memory 430 includes a simulation module 432, a failure validation module 434 and a design module 436. The apparatus 420 is configured to perform the steps elaborated in FIG 1.

The server 405 includes a communication unit 402, one or more processing units 404 and a memory 410. The memory 410 includes a replica database 412 and a manufacturer database 414. The memory 410 is configured to store computer program instructions defined by modules, for example, a fleet module 416 and an optimization module 418. In an embodiment, server 405 can also be implemented on a cloud computing environment, where computing resources are delivered as a service over the network 450.

The replica database 412 is a database of virtual replicas of the assets 482-488 and the technical installations 480 and 485. The virtual replicas are generated based on historical condition data of the assets 482-488. In an embodiment, the virtual replicas are generated based on Computer Aided Drawings of the assets 482-488 and the technical installation 480 and 485.

The manufacturer database 414 is a database of manufacturing service providers 490. The manufacturer database 414 includes a fleet specification of manufacturing systems 492-498 available to manufacture an optimized component in real-time.

As used herein, "cloud computing environment" refers to a processing environment comprising configurable computing physical and logical resources, for example, networks, servers, storage, applications, services, etc., and data distributed over the network 450, for example, the internet. The cloud computing environment provides on-demand network access to a shared pool of the configurable computing physical and logical resources. The network 450 is, for example, a wired network, a wireless network, a communication network, or a network formed from any combination of these networks.

The system 400 is also communicatively coupled to the manufacturing service provider 490. The manufacturing service provider 490 includes a fleet of manufacturing systems 492-498. For example, the manufacturing systems 492-498 employ varying type of additive manufacturing techniques such as Stereolithography, Digital Light Processing, Fused deposition Modeling and Selective Laser Sintering.

In operation, when a likelihood of failure of component 482A is predicted. The apparatus 420 receives an asset replica of the asset 482 from the replica database 412. The asset replica is updated with condition data of the asset 482 to generate the asset model by the simulation module 432. The predicted likelihood of failure is validated by the failure validation module 434 based on the asset model. The design module 436 is configured to generate an optimized geometric model for the component 482A such that the predicted likelihood of failure is overcome.

When the predicted likelihood of failure is validated at the apparatus 420, the server 405 receives a notification of validation of the predicted likelihood of failure. The fleet module 416 determines whether the predicted likelihood of failure is detected to a fleet historical data of the fleet of the component 482A (i.e. 484A, 486A and 488A). If the predicted likelihood of failure is recurrent in the fleet 484A, 486A and 488A, the optimized geometric model is used to support designers to modify specification of the component for the fleet 484A, 486A and 488A.

When the optimized geometric model is generated the server 405 informs the manufacturing service providers 490 regarding manufacture of the optimized component. The optimization module 418 determines which manufacturing system (between manufacturing systems 492-498) is most suitable to manufacture the optimized component. The optimization module 418 considers the type of manufacturing and location of the manufacturing systems 492-498 to determine the most suitable manufacturing system.

FIG 5 is a flowchart illustrating a method 500 to manage a technical installation based on an asset model and an optimized geometric model. The technical installation includes at least one asset. The method 500 starts at step 502 by receiving various types of data associated with condition of the asset and operating environment of the asset in the techncial installation. The condition data is received from different sources (e.g., sensors, scanners, user devices, etc.). The sensors measure operating parameters associated with the asset. The condition data is a measure of the operating parameters associated with the operation of the asset. For example, the condition data includes values of vibration, temperature, current, magnetic flux, velocity, power of a rotor in a turbine. The condition data also includes scanned data from the scanners such as thermal scanners, three-dimensional scanners, etc. The scanned data includes geometric properties of the components and the asset, such as height, length, width and contour of a component. Accordingly, the condition data is a measure of the geometric properties of the components.

At step 504, a likelihood of failure of a component in the asset is predicted based on an asset model of the asset. The likelihood of failure includes the type of failure that is likely to occur and time range when the failure is likely to occur. The asset model is a virtual replica of components and the interactions between the components in the asset.

In an embodiment, at step 504, the virtual replica of the asset and the technical installation is generated. The virtual replica includes FEM (finite element models) and network graphs that include Bayesian calibration algorithms, machine learning algorithms to predict operation of the components individually and in combination. The virtual replica can be a meta-model of the asset, which is a simplification of a high-fidelity simulation of the asset. The meta-model preserves essential behaviour and dominant effects for the purpose of reducing solution time or storage capacity required for the virtual replica.

At step 506, at least one fault indication associated with operation parameters of the asset. The at least one fault indication is detected based on the condition data associated with the operation of the asset. The at least one fault indication may also be detected based on historical data of the asset or a fleet of the asset. The likelihood of failure is predicted based on the at least one fault indication.

In an embodiment, at step 506, the at least one fault indication is detected by identifying an anomaly pattern in an asset historical data or a fleet historical data of the fleet of the asset. The anomaly pattern may also be identified in the condition data. The anomaly pattern is identified by comparing the asset historical data, the fleet historical data and the condition data based on predetermined threshold values. The predetermined threshold values include operator input values and/or boundary limits of operation of the asset. In an embodiment, the predetermined threshold values are learnt through machine learning algorithms based on failures occurring in the fleet of assets. Exemplary fault indications may include high temperature, increased vibration, etc.

At step 508, the at least one fault indication is mapped to the component using fault signatures of the at least one fault indication. The step 508 includes generating the fault signatures based on the asset model and the condition data of the asset. The fault signatures comprises the location each of the fault indications, location nexus between the at least one fault indication and the location of the each of the fault indications. The fault signature refers to an electronic footprint of the fault indications in the asset. The fault signatures contain information regarding various health status conditions of the asset.

At step 510, the predicted likelihood of failure is validated based on the fault signatures and the condition data associated with operation of the asset. Validation of the predicted likelihood of failure is based on sensor data generated from sensors associated with the asset and on the scanned data. The scanned data may be generated from the thermal scanner or the three-dimensional scanner associated with the asset. For example, the anomaly pattern in the sensor data which is mapped to the predicted likelihood of failure. In another example, the three-dimensional scanner scans the component upon its removal from the asset. The scanned data is analysed to validate the predicted likelihood of failure.

At step 512, failure parameters of the predicted likelihood of failure are determined. The failure parameters include operation parameters and geometric properties of the component that are associated with the predicted likelihood of failure. For example, the operation parameters include increased vibration or electric discharge and the geometric properties include deformation in the contour of the component. In an embodiment, the increased vibration may be mapped the deformation of the contour.

At step 514, a design specification of the component is determined from the condition data and the asset model. The design specification includes the component size and weight, performance, material, structure etc. In an embodiment, the design specification is a Computer Aided Design (CAD) model that is generated from the condition data and the asset model. For example, the scanned data from the three-dimensional scanner is used to reconstruct the CAD model in real-time.

At step 516, the design specification is mapped to the failure parameters by based on a sensitivity analysis of the failure parameters and the design specification. The sensitivity analysis evaluates change in the design specification and its impact on the failure parameters. In an embodiment, change in structure of the component is analysed to determine associated change in the failure parameters. For example, the structure of the component can be changed to reduce or increase vibration. Therefore, the sensitivity analysis indicates the origin of the failure parameters in terms of the design specification. Accordingly, the present method advantageously identifies potential cause of the predicted likelihood of failure.

At step 518, the optimized geometric model is generated of the component based on the failure parameters and the asset model. The optimized geometric model is generated such that the predicted likelihood of failure is mitigated. Further, the optimized geometric model is simulated on the asset model to understand whether the optimized geometric model is reliable.

The step 518 includes comparing the design specification of the component with a historical specification of the at least one component. The historical specification includes the component size and weight, performance, material, structure etc, when the component was manufactured. For example, the historical specification includes CAD model of the component prepared when it was manufactured. The comparison between the design specification and the historical specification indicates whether there has been any deviation in the component during operation of the asset. For example, the comparison determines changes in the component due to wear and tear or the operating environment.

Further, at step 518 sample specifications of the component are generated based on the comparison of the design specification and the sensitivity analysis. The sample specifications are configured to overcome the validated likelihood of failure. The sample specifications are simulated on the asset model to determine outcome of each of the sample specifications on the asset and the at least one component. The simulation of the sample specification includes determining reliability of each of the sample specifications. The reliability analysis is used to determine which sample specification is most optimized to mitigate the predicted likelihood of failure. In an embodiment, the sample specifications may include different variations material and contour for the component. The simulation of the variations will be suitable to determine which variation is most effective. Accordingly, the method may comprise generating the optimized geometric model of the component by selecting the optimized specification from the sample specifications based on the simulation.

At step 520, a determination is made whether the predicted likelihood of failure is recurrent in the fleet of assets. Further, it is determined whether the predicted likelihood of failure recurs above a recurrence threshold. Therefore, the component is analysed for potential failure in similar assets. If the predicted likelihood is above the recurrence threshold a fleet specification is updated with the optimized specification. Through this method, manufacture of the fleet of assets is managed to reduce downtime due to failure of the component. The present method is advantageous in a digital enterprise with a fleet of assets such as automobile plant, mobile phone manufacturing plant, etc.

At step 522, manufacture of the component is initiated based on the optimized geometric model through advanced manufacturing techniques. Example advanced manufacturing techniques include additive manufacturing techniques such as Fused deposition modelling (FDM), Stereolithographic (SLA), Digital Light Processing (DLP), Selective Laser Sintering (SLS), Selective laser melting (SLM), Laminated object manufacturing (LOM) and Digital Beam Melting (EBM).

At step 524, replacement of the component with the optimized component is initiated whereby the asset is capable of overcoming the predicted likelihood of failure. The step 524 includes actuating field devices to disassemble components of the asset to remove the component. Further, the field devices assemble the components of the asset with the optimized component. The field devices comprise automated units. For example, the field devices include robotic arms that automatically disassemble and assemble the asset when the optimized component is ready.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description.

FIG 1A, FIG 1B: Flowchart

FIG 2
system 200
apparatus 260
motor model 262
additive manufacturing device 270
robotic arms 280
motor 290
sensors 292
three-dimensional scanner 294

FIG 3
robotic printer 310
technical installation 390
assets 380A-380B
components 382A-386A, 382B-386B and 382C-386C
network interface 350
communication unit 312
processor 314
display panel 316
memory 320
simulation module 322
failure validation module 324
design module 326
printer unit 330
arms 340
vehicle unit 350
installation model 395

FIG 4
system 400
communication unit 402
processing units 404
server 405
memory 410
replica database 412
manufacturer database 414
fleet module 416
optimization module 418
apparatus 420
communication unit 422
processor 424
display panel 426
Graphical User Interface (GUI) 428
memory 430
simulation module 432
failure validation module 434
design module 436
network interface 450
technical installations 480 and 485
assets 482, 484 and 486, 488
components 482A, 482B, 484A, 484B, 486A, 486B, 488A and 488B
manufacturing service provider 490
fleet of manufacturing systems 492-498

FIG 5 flowchart

## Claims

1. A method of managing a technical installation (390) comprising an asset, the method comprising:
predicting a likelihood of failure of at least one component (382A) in the asset based on an asset model (385A) of the asset (380A), wherein the asset model (385A) is a virtual replica of components and the interactions between the components (382A, 384A, 386A) in the asset (380A);
determining failure parameters of the predicted likelihood of failure of the at least one component (382A); and
generating an optimized geometric model of the at least one component (382A) based on the failure parameters and the asset model(385A).

2. The method according to claim 1, further comprising:
instantaneously initiating manufacture of the at least one component (385A) based on the optimized geometric model through advanced manufacturing techniques to generate an optimized component (382A').

3. The method according to claim 2, further comprising:
instantaneously initiating replacement of the at least one component (382A) with the optimized component (382A') whereby the asset (380A) is capable of overcoming the predicted likelihood of failure.

4. The method according to claim 3, wherein instantaneously initiating replacement of the at least one component (382A) with the optimized component (382A') comprises:
actuating field devices (340) to disassemble components of the asset to remove the at least one component; and
actuating the field devices (340) to assemble the components of the asset with the optimized component (382A'), wherein the field devices comprises automated units.

5. The method according to claim 1, wherein predicting a likelihood of failure of at least one component (382A) in the asset (380A) based on an asset model (385A) of the asset (380A) :
detecting at least one fault indication associated with operation parameters of the asset (385A), wherein the at least one fault indication is detected based on the condition data associated with the operation of the asset (385A); and
predicting the likelihood of failure of the at least one component (382A) based on the at least one fault indication.

6. The method according to claim 5, wherein detecting at least one fault indication associated with operation parameters of the asset (380A) comprises:
detecting the at least one fault indication by identifying an anomaly pattern in one of asset historical data and a fleet historical data of a fleet of the asset (380A); and
mapping the at least one fault indication to the at least one component using fault signatures of the at least one fault indication.

7. The method according to claim 6, further comprising:
generating the fault signatures based on the asset model (385A) and the condition data of the asset, wherein the fault signatures comprises the location each of the fault indications, location nexus between the at least one fault indication and the location of the each of the fault indications; and
validating the predicted likelihood of failure based on the fault signatures and the condition data associated with operation of the asset (385A).

8. The method according to claim 7, wherein validating the predicted failure based on the condition data associated with operation of the asset (380A) comprises:
validating the predicted likelihood of failure based on sensor data generated from sensors (392) associated with the asset (380A); and
validating the predicted likelihood of failure based on scanned data generated from one of a thermal scanner and a three-dimensional scanner associated with the asset (380A), wherein the condition data includes the three-dimensional scanned data and the sensor data.

9. The method according to claim 1 to claim 8, determining failure parameters of the predicted likelihood of failure comprises:
determining a design specification of the at least one component (382A) from the condition data; and
mapping the design specification to the failure parameters by based on a sensitivity analysis of the failure parameters and the design specification.

10. The method according to one of claim 1 to claim 9, wherein generating the optimized geometric model of the at least one component (380A) based on the failure parameters and the asset model (385A):
comparing the design specification of the at least one component (382A) with a historical specification of the at least one component (382A);
generating sample specifications of the at least one component (382A) based on the comparison of the design specification and the sensitivity analysis, wherein the sample specifications are configured to overcome the validated likelihood of failure;
simulating the sample specifications on the asset model to determine outcome of each of the sample specifications on the asset (380A) and the at least one component (382A); and
generating the optimized geometric model of the at least one component (382A) by selecting an optimized specification from the sample specifications based on the simulation.

11. The method according to one of claim 1 to claim 10, further comprising:
determining whether the predicted likelihood of failure is recurrent in the fleet of assets above a recurrence threshold; and
updating a fleet specification with the optimized specification of the at least one component when the likelihood of failure is above the recurrence threshold.

12. An apparatus (310) for managing a technical installation, the apparatus comprising:
one or more processing units; and
a memory unit (320) communicative coupled to the one or more processing units, wherein the memory unit comprises a maintenance module stored in the form of machine-readable instructions executable by the one or more processing units, wherein the maintenance module (325) is configured to perform one or more method steps according to claims 1 to 11.

13. The apparatus according to claim 12, wherein the apparatus is an additive manufacturing device capable of communicating with the asset, field devices and sensors, scanners associated with the asset (380A).

14. A system (400) comprising:
one or more devices capable of providing condition data associated with condition of assets in at least one technical installation (480, 485);
an apparatus (420) communicatively coupled to the devices, wherein the apparatus is configured according to claim 12 for determining managing actions to be performed in the technical installation (480, 485);
one or more control devices communicatively coupled to the apparatus, wherein each control device is configured to generate control signals based on the managing actions to be performed in the technical installation(480, 485); and
one or more field devices communicatively coupled to the apparatus, each field device is configured to perform maintenance action on the based on the control signals.

15. A computer-program product having machine-readable instructions stored therein, which when executed by one or more processing units, cause the one or more processing units to perform a method according to claims 1 to 11.
